# EUROPEAN PATENT APPLICATION

(11) **EP 3 476 547 A1**
(43) Date of publication of application: **01.05.2019**
(21) Application number: 17815510.7
(22) Date of filing: 23.06.2017
(51) Int. Cl.: B25J 9/06, B23P 19/00, B23P 19/04

(54) **ROBOT, CONVEYANCE DEVICE, AND METHOD FOR CONVEYING CONNECTOR WITH HARNESS**

(30) Priority: 24.06.2016 JP 2016125865
(71) Applicant: Kawasaki Jukogyo Kabushiki Kaisha, Kobe-shi, Hyogo 650-8670 (JP)
(72) Inventor: HIRATA, Kazunori, Kobe-shi, Hyogo 650-8670 (JP); SASAKI, Keita, Kobe-shi, Hyogo 651-0083 (JP)
(74) Representative: Witte, Weller & Partner Patentanwälte mbB
(86) International application number: PCT/JP2017/023180
(87) International publication number: WO 2017/222045

(57) **Abstract**

A robot includes a first holding part (18) configured to hold a given portion of a workpiece (110) including a flexible elongated portion (112) extending in first directions (D1), a second holding part (19) configured to hold a given portion of the elongated portion (112) of the workpiece (110) with play in directions intersecting with the first directions (D1) and one or more robotic arms (13) configured to move the first holding part (18) and the second holding part (19) within a given operating range. The second holding part (19) relatively moves in the first direction (D1) with respect to the first holding part (18).

## Description

### TECHNICAL FIELD

The present disclosure relates to a robot and a method of conveying a connector with harnesses.

### BACKGROUND ART

Conventionally, multiple arm robot used for conveying elongated objects are known (e.g., see Patent Document 1).

The multiple arm robots are used for a work in which an assembly comprised of a motor unit, a connector, and harnesses which connect the motor unit with the connector, is attached to a frame, and include an end effector which grips the motor unit and an end effector which grips the connector. When conveying the assembly, the robot lifts the assembly while gripping the motor unit and the connector by the corresponding end effectors.

### [Reference Document of Conventional Art]

### [Patent Document]

[Patent Document 1] JP1995-223179A

### DESCRIPTION OF THE DISCLOSURE

### [Problems to be Solved by the Disclosure]

However, there is a problem that the multiple arm robot of Patent Document 1 is inapplicable to the conveyance of the assembly if at least one end of the harnesses is a free end.

### [Summary of the Disclosure]

In order to solve the problem, a robot according to one aspect of the present disclosure includes a first holding part configured to hold a given portion of a workpiece including a flexible elongated portion extending in first directions, a second holding part configured to hold a given portion of the elongated portion of the workpiece with play in directions intersecting with the first directions, and one or more robotic arms configured to move the first holding part and the second holding part within a given operating range. The second holding part relatively moves in the first direction with respect to the first holding part.

According to this configuration, the second holding part can hold the elongated portion of the workpiece including the flexible elongated portion of which the posture easily varies. Further, since the second holding part holds the given portion of the elongated portion of the workpiece with the play in the directions which intersect with the first directions, the second holding part can be smoothly moved in the first directions with respect to the first holding part. As a result, the holding position of the elongated portion by the second holding part can be moved to a position where the workpiece can be conveyed in a balanced manner. Thus, the workpiece including the flexible elongated portion can appropriately be conveyed.

The play may be a gap formed in the directions intersecting with the first directions, between the given portion of the elongated portion of the workpiece and the second holding part.

According to this configuration, the play can appropriately be constituted.

The second holding part may include an elastic body provided to a part of the second holding part that contacts the given portion of the elongated portion of the workpiece. The play may be formed by an elastic deformation of the elastic body.

According to this configuration, the play can appropriately be constituted.

The robot may further include a first arm having the first holding part, and a second arm having the second holding part. The second arm may move the second holding part in the first direction with respect to the first holding part.

According to this configuration, the given portion of the workpiece suitable for the conveyance can be held by the first holding part and the second holding part. Further, the portion held by the first holding part and the second holding part can flexibly be changed according to the situation.

The workpiece may be a connector with harnesses including a connector body and harnesses extending from the connector body in the first directions, the elongated portion being the harnesses.

According to this configuration, the connector with the harnesses can be conveyed.

The first holding part may hold the workpiece by sucking the workpiece.

According to this configuration, the first holding part can appropriately hold the given portion of the workpiece.

In order to solve the problem described above, a conveying device according to another aspect of the present disclosure includes a first holding part configured to hold a workpiece including a flexible elongated portion extending in first directions, a second holding part configured to hold a given portion of the elongated portion of the workpiece with play in directions intersecting with the first directions, and one or more holding part moving mechanisms configured to move the first holding part and the second holding part within a given operating range. The second holding part relatively moves in the first direction with respect to the first holding part.

According to this configuration, the second holding part can hold the elongated portion of the workpiece including the flexible elongated portion of which the posture easily varies. Further, since the second holding part holds the given portion of the elongated portion of the workpiece with the play in the directions which intersect with the first directions, the second holding part can be smoothly moved in the first directions with respect to the first holding part. As a result, the holding position of the elongated portion by the second holding part can be moved to a position where the workpiece can be conveyed in a balanced manner. Thus, the workpiece including the flexible elongated portion can appropriately be conveyed.

In order to solve the problem described above, a method according to another aspect of the present disclosure is a method of conveying a connector with harnesses by using a robot including a first holding part, a second holding part, and one or more robotic arms configured to move the first holding part and the second holding part, the connector with harnesses including a connector body, and harnesses extending from the connector body in first directions. The method includes steps of holding the connector body by the first holding part, holding a portion of the harnesses closer to the connector body by the second holding part, and moving by the robotic arm the second holding part holding the portion of the harness closer to the connector body, away from the connector body held by the first holding part in the first direction.

According to this configuration, a workpiece including a flexible elongated portion can be conveyed in a balanced manner.

### [Effect of the Disclosure]

The present disclosure has the effect that the workpiece including a flexible elongated portion can be conveyed appropriately.

### BRIEF DESCRIPTION OF DRAWINGS

Fig. 1 is a view illustrating one example of a structure of a robot according to Embodiment 1 of the present disclosure.
Fig. 2 is a block diagram schematically illustrating one example of a configuration of a control system of the robot in Fig. 1.
Fig. 3 is a perspective view illustrating one example of structures of a first holding part and a second holding part of the robot in Fig. 1.
Fig. 4 is a flowchart illustrating one example of operation of the robot in Fig. 1.
Fig. 5 is a perspective view illustrating one example of operation of the robot in Fig. 1.
Fig. 6 is a perspective view illustrating one example of operation of the robot in Fig. 1.
Fig. 7 is a perspective view illustrating one example of operation of the robot in Fig. 1.
Fig. 8 is a perspective view illustrating one example of operation of the robot in Fig. 1.
Fig. 9 is a plan view illustrating one example of operation of the robot in Fig. 1.
Fig. 10 is a plan view illustrating one example of operation of the robot in Fig. 1.
Fig. 11 is a plan view illustrating one example of operation of the robot in Fig. 1.
Fig. 12 is a perspective view illustrating one example of a structure of a robot according to Embodiment 2 of the present disclosure.
Fig. 13 is a perspective view illustrating one example of a structure of a robot according to Embodiment 3 of the present disclosure.

### MODES FOR CARRYING OUT THE DISCLOSURE

Hereinafter, embodiments of the present disclosure are described with reference to the drawings. Note that the present disclosure is not limited by these embodiments. In the following, the same or corresponding elements are denoted with identical referential characters throughout the figures to omit redundant description.

### (Embodiment 1)

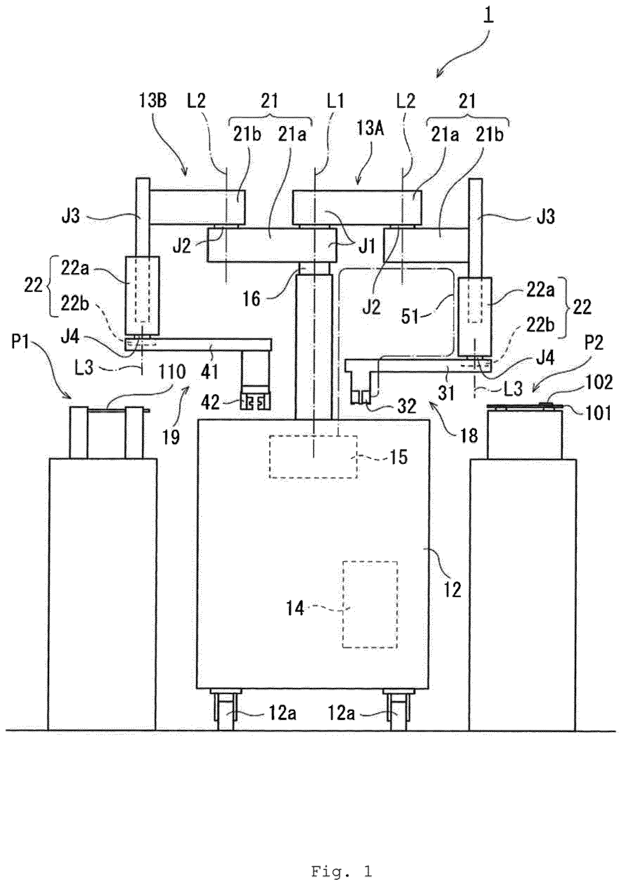

Fig. 1 is a view illustrating one example of a structure of the robot 1 according to one embodiment of the present disclosure.

As illustrated in Fig. 1, the robot 1 is, for example, a horizontal articulated dual-arm robot having a pair of robotic arms 13. Note that the robotic arms are not limited to the structure, but the robotic arms may be vertical articulated robotic arms.

The robot 1 includes a carriage 12, a first robotic arm 13A and a second robotic arm 13B supported by the carriage 12, a first holding part 18 which continues to a tip-end part of the first robotic arm 13A, a second holding part 19 which continues to a tip-end part of the second robotic arm 13B, and a control device 14 and a vacuum generating device 15 which are accommodated in the carriage 12. Below, when the first robotic arm 13A and the second robotic arm 13B are not distinguished from each other, they may simply be referred to as the robotic arm(s) 13.

The vacuum generating device 15 is, for example, a vacuum pump, CONVUM®, etc., and is provided, for example, inside the carriage 12. However, the location of the vacuum generating device 15 may not be limited to the location described above, and may be provided, for example, inside the robotic arm 13, in another carriage connected with the carriage 12, or near the carriage 12. The vacuum generating device 15 is connected with a suction head 32 (described later) via piping 51. The piping 51 is provided with, for example, an on-off valve (not illustrated) which opens and closes the piping 51. Operation of the vacuum generating device 15, and the opening and closing of the on-off valve are controlled by the control device 14.

The carriage 12 has wheels 12a so as to be movable. The carriage 12 includes a base shaft 16 which is fixed to an upper surface of the carriage 12.

The first robotic arm 13A moves the first holding part 18 within a given operating range. The second robotic arm 13B moves the second holding part 19 within a given operating range. The robotic arm 13 is, for example, a horizontal articulated robotic arm, which includes an arm part 21 and a wrist part 22. The first robotic arm 13A and the second robotic arm 13B are capable of operating independently from each other or associated with each other.

The arm part 21 positions the wrist part 22 at any position within the operating range. The arm part 21 includes a first link 21a and a second link 21b, which extend horizontally. The first link 21a is coupled at a base-end part to the base shaft 16 of the carriage 12 through a rotary joint J1 so as to be rotatable on a rotation axis L1 passing through an axial center of the base shaft 16. The second link 21b is coupled to a tip-end part of the first link 21a through a rotary joint J2 so as to be rotatable on a rotation axis L2 defined at the tip-end part of the first link 21a.

The wrist part 22 changes a mechanism attached thereto into any posture. The wrist part 22 includes an elevating part 22a and a rotary part 22b.

The elevating part 22a is coupled to a tip-end part of the second link 21b through a linear-motion joint J3 so as to be ascendable and descendable with respect to the second link 21b. The rotary part 22b is coupled to a lower end part of the elevating part 22a through a rotary joint J4 so as to be rotatable on a rotation axis L3 defined at a lower end of the elevating part 22a.

In this embodiment, the rotation axes L1-L3 are parallel to each other, and extend, for example, in the vertical directions. The extending directions of the rotation axes L1-L3 are parallel to the ascending and descending directions of the elevating part 22a.

The arm 13 is provided with driving servo motors (not illustrated) and encoders (not illustrated) which detect rotational angles of the servo motors, corresponding to the joints J1-J4. The rotation axis L1 of the first robotic arm 13A and the rotation axis L1 of the second robotic arm 13B are located on the same straight line, and the first link 21a of the first robotic arm 13A and the first link 21a of the second robotic arm 13B are provided with a vertical height difference. Thus, the dual-arm robotic arms 13 are constructed compactly. Moreover, the structure of the dual-arm robotic arms 13 can be simplified.

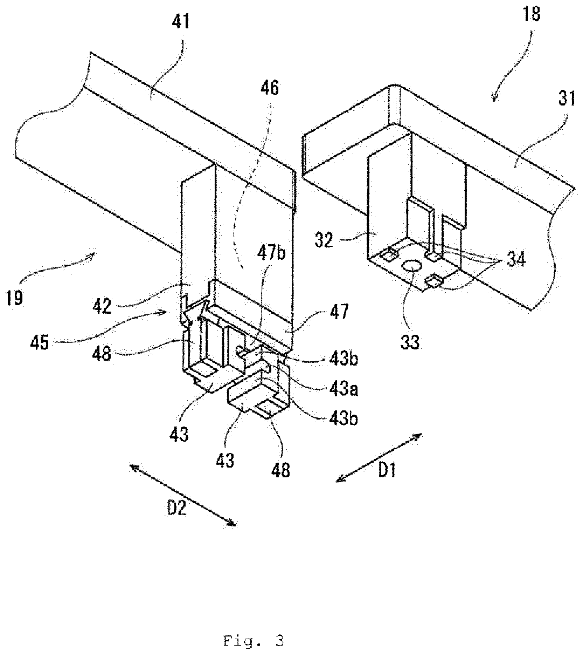

Fig. 3 is a perspective view illustrating one example of structures of the first holding part 18 and the second holding part 19.

As illustrated in Fig. 3, the first holding part 18 holds a given portion of a workpiece. That is, the first holding part 18 restrains and holds the workpiece, for example, by sucking the workpiece. The first holding part 18 is coupled to the first robotic arm 13A (see Fig. 1), and includes a first coupling link 31 and the suction head 32. Note that the first holding part 18 is not limited to have the structure in which the workpiece is held by being sucked, but, alternatively, it may have a structure in which, for example, the workpiece is held by being pinched.

The first coupling link 31 is a plate-like body extending in a direction which intersects with the rotation axis L3, and extends, for example, horizontally. A base-end part of the first coupling link 31 is coupled to the rotary part 22b of the first robotic arm 13A.

The suction head 32 sucks and holds the workpiece. The suction head 32 is formed in a column shape extending downwardly from a tip-end part of the first coupling link 31. Therefore, the suction head 32 revolves on the rotation axis L3 by rotating the first coupling link 31 on the rotation axis L3. The suction head 32 includes an opening 33 and regulating parts 34. The opening 33 is a hole formed substantially at the center of a lower surface of the suction head 32. The suction head 32 is connected with the vacuum generating device 15 via the piping 51 so that the opening 33 communicates with the piping 51. When the on-off valve of the piping 51 is opened, the workpiece located near the opening 33 is sucked and adhered to the lower surface of the suction head 32. On the other hand, when the on-off valve of the piping 51 is closed, the suction of the workpiece by the suction head 32 is stopped.

The regulating part 34 regulates the movement of the workpiece sucked by the suction head 32 in extending directions of the lower surface of the suction head 32. The regulating parts 34 are a plurality of projections which are formed around the opening 33 in the lower surface of the suction head 32 and which project downwardly from the lower surface of the suction head 32. The regulating parts 34 hold the workpiece sucked by the suction head 32 at an area surrounded by the plurality of projections. Note that the regulating part 34 is not limited to the plurality of projections, but, alternatively, may be a fitting part which fits to the workpiece sucked by the suction head 32.

The second holding part 19 holds a given portion of an elongated portion (described later) of the workpiece, with play or clearance in a direction which intersects with the extending directions of the elongated portion (extending directions of transverse cross section of the workpiece). The second holding part 19 is coupled to the second robotic arm 13B (see Fig. 1), and includes a second coupling link 41 and a holding unit 42. As described above, the first holding part 18 and the second holding part 19 are coupled to different robotic arms 13 (the first robotic arm 13A and the second robotic arm 13B), thereby being movable independently from each other. Thus, as will be described later in detail, the second holding part 19 is relatively movable in first directions D1 with respect to the first holding part 18. That is, in this embodiment, the first robotic arm 13A and the second robotic arm 13B constitute a holding part moving mechanism.

The second coupling link 41 is a plate-like body extending in a direction which intersects with the rotation axis L3, and extends, for example, horizontally. A base-end part of the second coupling link 41 is coupled to the rotary part 22b of the second robotic arm 13B.

The holding unit 42 is a mechanism which holds harnesses 112 of a connector 110 with the play in a direction which intersects with the extending directions of the harnesses 112 (i.e., the first direction D1). The holding unit 42 is formed in a column shape which extends downwardly from a tip-end part of the second coupling link 41. Therefore, the holding unit 42 revolves on the rotation axis L3 by rotating the second coupling link 41 on the rotation axis L3. Thus, the suction head 32 is disposed at the tip-end part of the first coupling link 31 which is the plate-like body, and the holding unit 42 is disposed at the tip-end part of the second coupling link 41 which is the plate-like body. Therefore, since the suction head 32 and the holding unit 42 can be brought close to each other, a small workpiece, such as the connector 110, can be handled.

The holding unit 42 includes a pair of holding bodies 43, and an opening-and-closing drive mechanism 45 which moves the pair of holding bodies 43 in given opening-and-closing directions D2. The opening-and-closing directions D2 are defined in directions which intersect with the first directions D1, as described later.

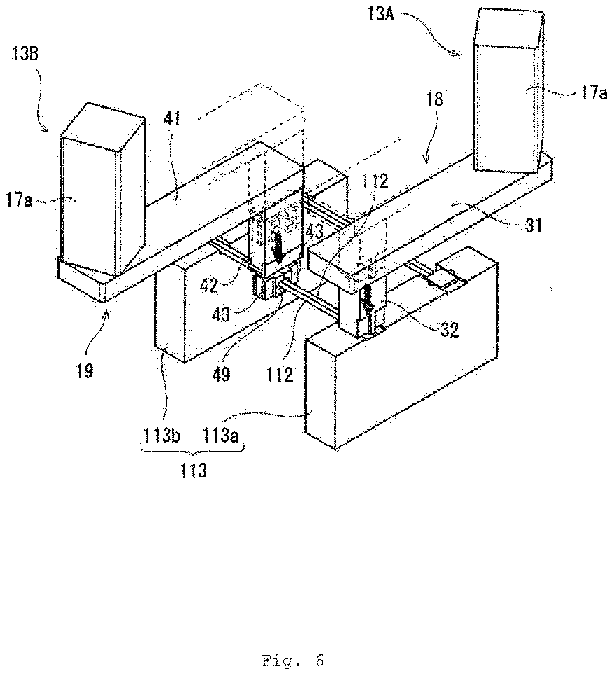

The pair of holding bodies 43 are disposed so as to oppose to each other in the opening-and-closing directions. Each holding body 43 includes a recess 43a in the opposing surface which opposes to the other holding body 43, and abutting surfaces 43b. The recess 43a is formed in an intermediate part of the opposing surface of the holding body 43, and has a shape which is recessed in a direction in which the opposing surface which opposes to the other holding body 43 separates from the other holding body 43. When the opposing surfaces of the pair of holding bodies 43 are abutted on each other, the recesses 43a of the pair of holding bodies 43 form a through-hole 49 (see Fig. 6) which penetrates the pair of holding bodies 43 in directions which intersect with the opening-and-closing directions of the pair of holding bodies 43 (first directions D1). The cross-sectional area of the through-hole 49 is formed larger than the cross sectional area at the portion of the workpiece which is held, and the pair of holding bodies 43 hold the workpiece located inside the through-hole 49 with the play. Thus, the play is comprised of a gap formed between the workpiece and the pair of holding bodies 43 in the directions which intersect with the extending directions of the recesses 43a (through-hole 49). Each holding body 43 is made of material, such as ultra high molecular weight polyethylene, which is excellent in, for example, wear resistance and self-lubricity.

The abutting surfaces 43b are comprised of a surface extending upwardly from an upper end of the recess 43a and a surface extending downwardly from a lower end of the recess 43a. When the opposing surfaces of the pair of holding bodies 43 are abutted on each other, the abutting surfaces 43b of the pair of holding bodies 43 contact each other to close the gap between the pair of abutting surfaces 43b. Thus, the movement of the workpiece in the directions which intersect with the first directions D1 is regulated.

The opening-and-closing drive mechanism 45 includes an actuator 46, a base 47, and a pair of movable elements 48. The base 47 has, in a lower surface thereof, a guide groove 47b extending in the opening-and-closing directions. The pair of movable elements 48 engage, at upper end portions, with the guide groove 47b. Thus, the guide groove 47b guides the movable elements 48 in the opening-and-closing directions. The pair of movable elements 48 support the pair of holding bodies 43 by attaching outer side surfaces of the pair of holding bodies 43 to portions of the movable elements 48 ranging from intermediate portions to lower end portions, respectively. In this embodiment, the pair of holding bodies 43 are removably attached to the pair of movable elements 48. Thus, the pair of holding bodies 43 can be replaced according to the shape of the workpiece to be held by the pair of holding bodies 43. The actuator 46 moves the pair of movable elements 48 between an open position and a closed position. The open position is defined at a position where the pair of holding bodies 43 attached to the pair of movable elements 48 separate from each other, and a space having a larger width than a width of the held portion of the workpiece in the opening-and-closing directions is formed between the pair of holding bodies 43 (between the pair of abutting surfaces 43b). The closed position is defined at a position where the abutting surfaces 43b of the pair of holding bodies 43 are abutted on each other to form the through-hole 49.

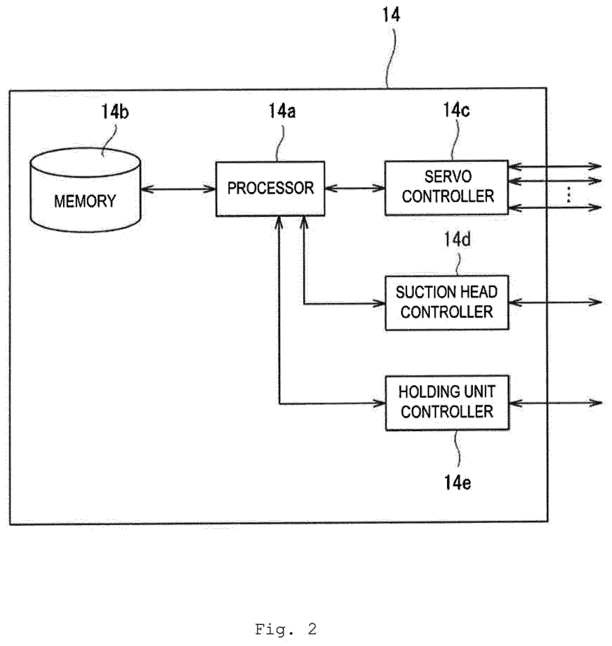

Fig. 2 is a block diagram schematically illustrating one example of a structure of a control system of the robot 1.

As illustrated in Fig. 2, the control device 14 includes a processor 14a, a memory 14b, a servo controller 14c, a suction head controller 14d, and a holding unit controller 14e. The control device 14 is, for example, a robot controller provided with a computer, such as a microcontroller. The control device 14 may be comprised of a sole control device 14 which carries out a centralized control, or may be comprised of a plurality of control devices 14 which collaboratively carry out a distributed control.

The memory 14b stores information, such as a basic program as the robot controller, and various fixed data. The processor 14a controls various operations of the robot 1 by reading and executing software, such as the basic program, stored in the memory 14b. That is, the processor 14a generates control instructions of the robot 1, and outputs them to the servo controller 14c, the suction head controller 14d, and the holding unit controller 14e. The servo controller 14c controls the drive of the servo motors corresponding to the joints J1-J4 of the first robotic arm 13A and the second robotic arm 13B of the robot 1 based on the control instructions generated by the processor 14a. The suction head controller 14d controls operation of the suction head 32 by controlling the vacuum generating device 15 based on the control instruction generated by the processor 14a. The holding unit controller 14e controls operation of the holding unit 42 by controlling the actuator 46 based on the control instruction generated by the processor 14a.

### [Example of Operation]

Next, one example of operation of the robot 1 is described.

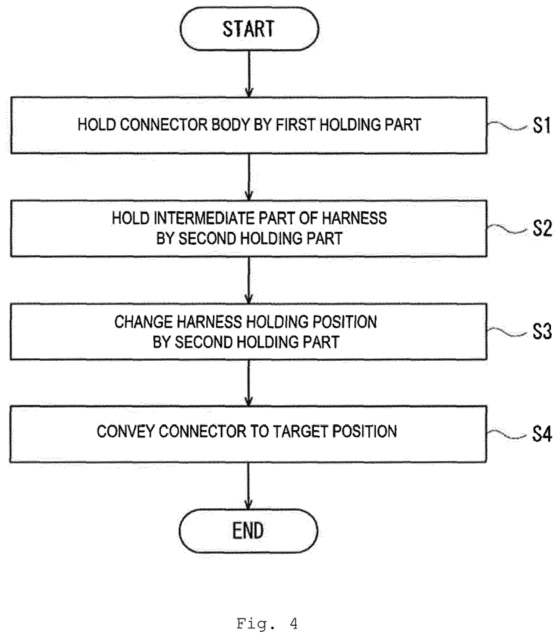

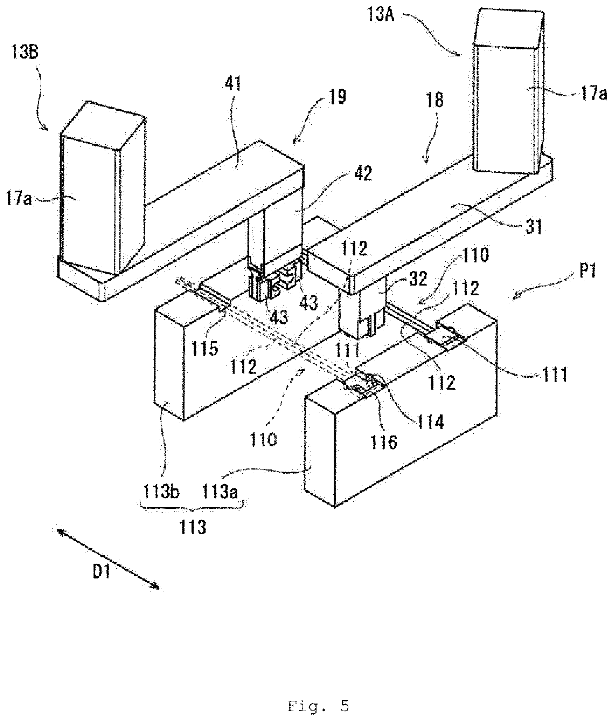

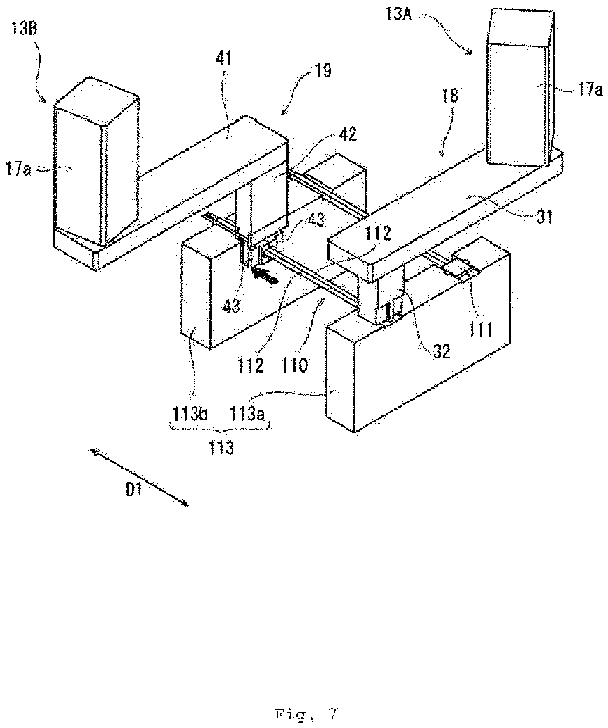

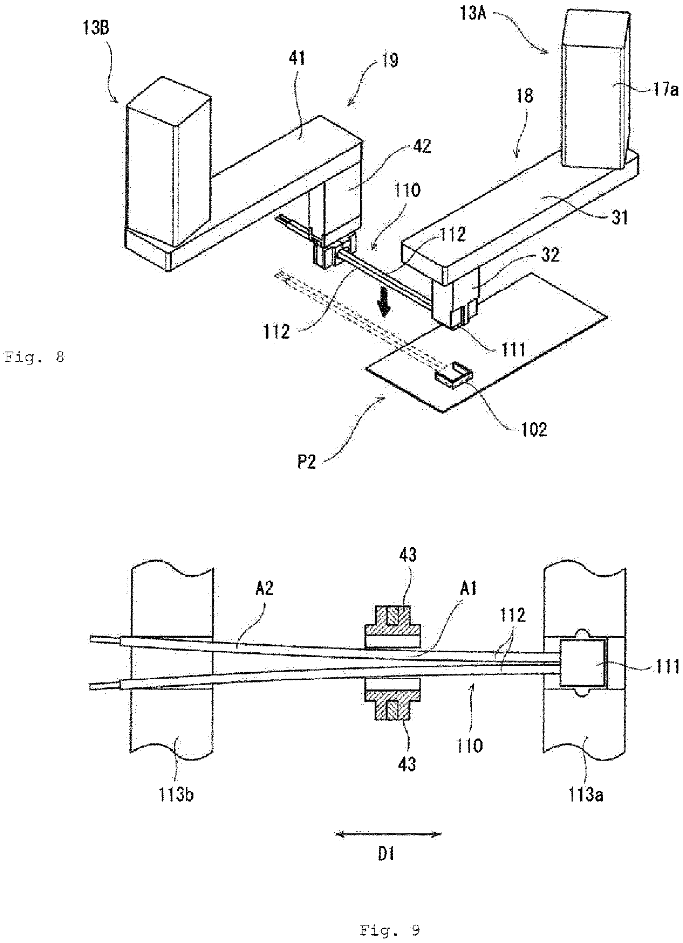

Fig. 4 is a flowchart illustrating one example of the operation of the robot 1. Figs. 5 to 8 are perspective views illustrating one example of the operation of the robot 1. Figs. 9 to 11 are perspective views illustrating one example of the operation of the robot 1.

As illustrated in Fig. 1, in this example of operation, the robot 1, for example, performs a work in which it picks up the connector 110 located at a storage P1, and attach the connector 110 to a socket 102 of a substrate 101 located in a workspace P2. As illustrated in Fig. 5, the connector 110 includes a connector body 111 (first portion) to be connected to the socket 102, and a pair of harnesses 112 which are attached to the connector body 111 at a base-end part, and tip-end parts of which are free ends. The pair of harnesses 112 are not connected to each other. An intermediate part A1 (see Fig. 9) of the pair of harnesses 112 constitutes a second portion, and a tip-end part A2 constitutes a third portion. At the storage P1, the connector 110 is placed on a connector placement table 113. The connector placement table 113 includes a connector body placement part 113a where the connector body 111 is placed on an upper surface thereof, and a harness free end placement part 113b where the free ends of the harnesses 112 are placed on an upper surface thereof. The connector 110 is placed so as to bridge between the connector body placement part 113a and the harness free end placement part 113b. Extending directions of the harnesses 112 constitute the first directions D1.

Note that a recess 114 may be formed in a portion of the upper surface of the connector body placement part 113a where the connector 110 is placed so that the connector 110 placed on the connector body placement part 113a is aligned in a given position. Similarly, a recess 115 may be formed in a portion of the upper surface of the harness free end placement part 113b where the connector 110 is placed so that the placed connector 110 is aligned in a given position. Thus, the connector 110 can be positioned suitably at the given positions of the connector placement table 113.

Furthermore, an opening 116 connected with a vacuum generating device (not illustrated) through piping may be formed in the bottom of the recess 114. Thus, the connector body 111 located in the recess 114 can be sucked to be positioned. Therefore, it can prevent that the connector 110 placed on the connector body placement part 113a deviates from the given position. In this case, when a holding position changing step described later is carried out before the suction head 32 holds the connector body 111, the connector 110 can be held at the given position.

As illustrated in Fig. 5, the control device 14 first controls the first robotic arm 13A to position the suction head 32 near the upper surface of the connector body 111 of the connector 110 placed on the connector body placement part 113a. The control device 14 then causes the suction head 32 to suck and hold the connector body 111 of the connector 110 (Connector Body Holding Step: Step S1).

The control device 14 then controls the opening-and-closing drive mechanism 45 to position the pair of holding bodies 43 at the open position so that the pair of holding bodies 43 are separated from each other. The control device 14 controls the second robotic arm 13B to position the holding unit 42 so that the gap formed between the pair of holding bodies 43 separated from each other is located above the intermediate part A1 of the pair of harnesses 112. Further, the control device 14 controls the pair of holding bodies 43 so that they take a posture in which of the extending directions of the pair of recesses 43a (i.e., in the extending directions of the through-hole 49 formed by positioning the pair of holding bodies 43 at the closed position) coincide with the extending directions of the harnesses 112 of the connector 110 (first directions D1). Then, the holding unit 42 is lowered from this position. Thus, the intermediate part A1 of the pair of harnesses 112 passes through between the pair of abutting surfaces 43b, and is located between the pair of recesses 43a.

Next, the control device 14 controls the opening-and-closing drive mechanism 45 to position the pair of holding bodies 43 at the closed position. Thus, the intermediate part A1 of the harnesses 112 of the connector 110 is held by the through-hole 49 of the holding unit 42 with the play (Harness Holding Step: Step S2).

Next, the control device 14 controls the second robotic arm 13B to move the holding unit 42 in the first direction D1 and in a direction separating from the suction head 32 and the connector body 111 (Holding Position Changing Step: Step S3). As described above, since the second holding part 19 holds the intermediate part A1 of the harnesses 112 of the connector 110 with the play in the directions which intersect with the first directions D1, the second holding part 19 can be smoothly moved in the first directions D1 with respect to the first holding part 18. Thus, the holding unit 42 moves in the extending directions of the harnesses 112 of the connector 110, and the tip-end part A2 of the pair of harnesses 112 are held by the through-hole 49 of the holding unit 42 with the play. Since the connector body 111 of the connector 110 is held by the suction head 32, the connector 110 is prevented from moving during the process of moving the holding unit 42 by the pair of harnesses 112 contacting the through-hole 49. Thus, the robot 1 holds both ends of the connector 110.

Next, the control device 14 controls the first robotic arm 13A and the second robotic arm 13B to lift the connector 110 while maintaining the relative spatial relationship between the suction head 32 and the holding unit 42, and then convey the connector 110 to the workspace P2 (Step S4).

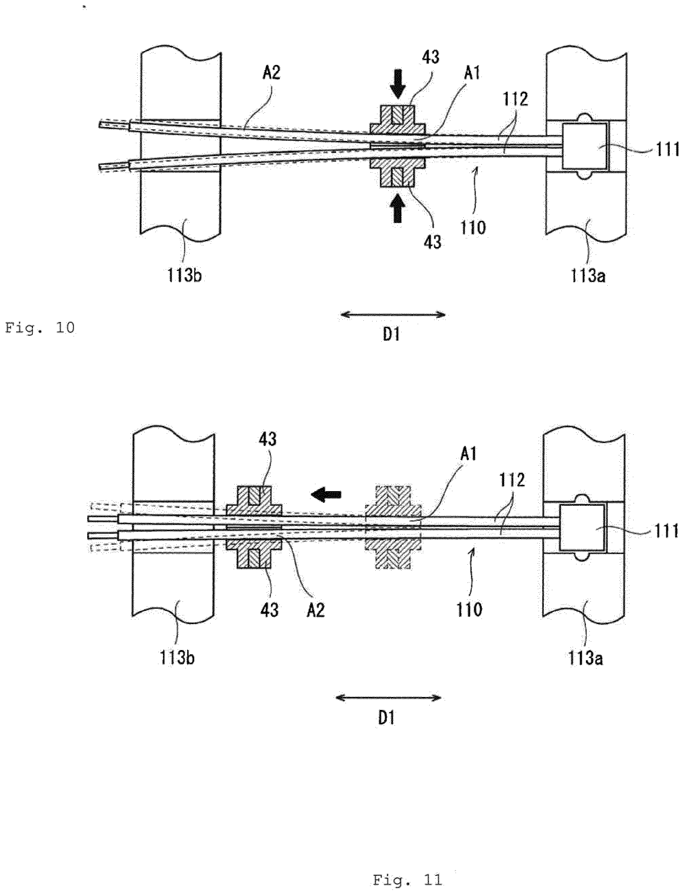

As illustrated in Fig. 9, since the pair of harnesses 112 are not connected to each other, the pair of harnesses 112 of the connector 110 placed on the connector placement table 113 may greatly spread and increase a spacing between the harnesses 112 as they are away from the connector body 111 (as they go toward the tip-end parts from the base-end parts). In this case, when lifting the connector 110, in order to hold the tip-end parts A2 of the harnesses 112 held by holding unit 42, the control device 14 causes the holding unit 42 to position at the location where the gap formed between the pair of holding bodies 43 which separate from each others is located above the tip-end part A2 of the pair of harnesses 112, and then causes the holding unit 42 to be lowered from this position. In such a case, the tip-end part A2 of the pair of harnesses 112 may collide with the pair of holding bodies 43 and may not be able to pass through the space between the pair of abutting surfaces 43b. Moreover, since the pair of harnesses 112 are flexible, the harnesses 112 of the connector 110 may be curved or bent. Also in this case, when lifting the connector 110, in order to hold the tip-end part A2 of the harnesses 112 held by the holding unit 42, the control device 14 causes the holding unit 42 to position at the location where the gap formed between the pair of holding bodies 43 which separate from each others is located above the tip-end part A2 of the pair of harnesses 112, and then causes the holding unit 42 to be lowered from this position. The tip-end part A2 of the pair of harnesses 112 may collide with the pair of holding bodies 43, and may not be able to pass through the space between the pair of abutting surfaces 43b. On the other hand, as illustrated in Fig. 10, the control device 14 is located near the connector body 111 positioned by being held at the suction head 32, and the base-end part is fixed to the connector body 111. Thus, the pair of holding bodies 43 once hold the intermediate part of the pair of harnesses 112 where the variation in displacement is small. Then, as illustrated in Fig. 11, the pair of holding bodies 43 are moved toward the tip-end part A2 of the harnesses 112 being held where the pair of holding bodies 43 hold the connector 110 when lifting. Therefore, the tip-end part A2 of the pair of harnesses 112 can be held appropriately.

Further, when lifting the connector 110, the suction head 32 provided to the first robotic arm 13A holds the base-end part of the connector 110, i.e., the connector body 111, and the holding unit 42 provided to the second robotic arm 13B holds the tip-end part of the connector 110, i.e., the tip-end part A2 of the pair of harnesses 112. The connector 110 can be conveyed in a balanced manner from the storage P1 toward the workspace P2, and a change in the posture of the connector 110 can be prevented.

Next, as illustrated in Fig. 8, in the workspace P2, the connector body 111 of the connector 110 is positioned above the socket 102 of the substrate 101. Then, the connector 110 is moved downwardly, and the connector body 111 is fitted into the socket 102 to engage the socket 102 with the connector body 111.

Next, the control device 14 controls the opening-and-closing drive mechanism 45 to position the pair of holding bodies 43 at the open position, and then stop the suction of the connector body 111 by the suction head 32. The control device 14 controls the first robotic arm 13A and the second robotic arm 13B to move the suction head 32 and the holding unit 42 to the storage P1.

Note that the work described above performed by the robot 1 is an illustration, and the present disclosure is not limited to the illustrated work. Alternatively, the robot 1 may be used, for example, for a work in which sausages connected in a row are conveyed.

As described above, the control device 14 of the robot 1 of the present disclosure is capable of moving the holding unit 42 in the extending directions of the harnesses 112 with respect to the suction head 32. Thus, the connector body 111 (first portion of the workpiece) can be held using the suction head 32, the intermediate part A1 (second portion of the workpiece) of the pair of harnesses 112 where the variation in displacement is small can be held using the holding unit 42, and the holding unit 42 can be moved toward the tip-end part A2 (third portion of the workpiece) of the pair of harnesses 112. Therefore, the tip-end parts of the pair of harnesses 112 can be held appropriately, and the connector 110 can be conveyed in the balanced manner. Moreover, since the connector 110 is held at two locations of the first holding part 18 and the second holding part 19, the connector 110 is prevented from falling during the conveyance.

### (Embodiment 2)

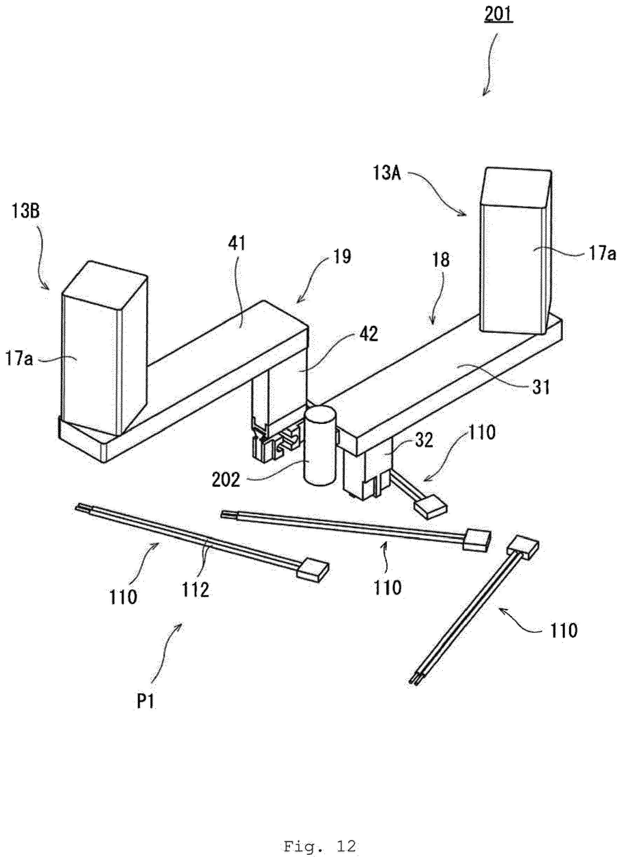

Fig. 12 is a perspective view illustrating one example of a structure of a robot 201 according to Embodiment 2.

In Embodiment 1, the robot 1 holds to pick up the connector 110 located at the given position on the connector placement table 113. On the other hand, in this embodiment, a trot 201 may hold and pick up one of a large number of connectors 110 scattered in the storage P1. That is, the robot 1 further has a camera 202, as illustrated in Fig. 11.

The control device 14 (see Fig. 1) causes the camera 202 to image the storage P1, selects one of the plurality of connectors 110 scattered in the storage P1, causes the suction head 32 to hold the connector body 111 of the selected connector 110 and causes the holding unit 42 to hold the harnesses 112.

### (Embodiment 3)

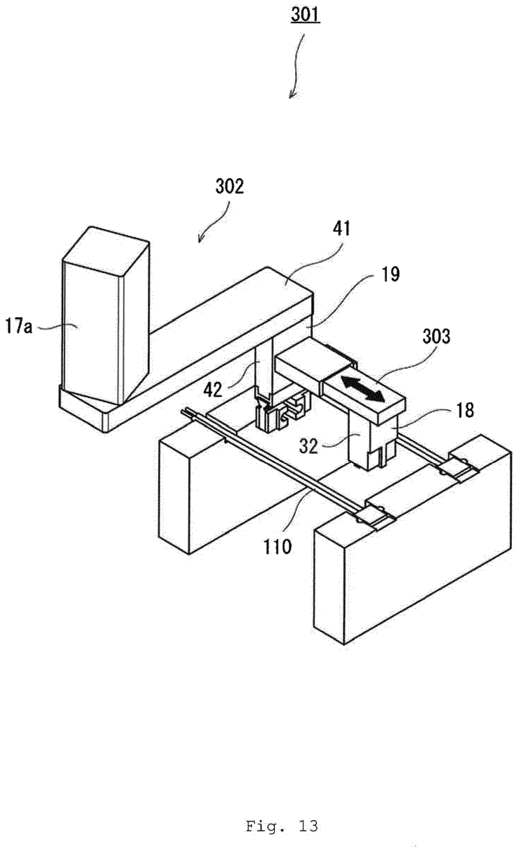

Fig. 13 is a perspective view illustrating one example of a structure of a robot 301 according to Embodiment 3.

In Embodiment 1, the robot 1 is the horizontal articulated dual-arm robot having the pair of robotic arms 13. On the other hand, as illustrated in Fig. 13, the robot 301 includes a single robotic arm 302 in this embodiment. A holding unit 304 is attached to the robotic arm 302. The holding unit 304 includes a first holding part 18, a second holding part 19, a spacing changing mechanism 303 which changes the spacing between the first holding part 18 and the second holding part 19 in the extending directions of the pair of harnesses 112 (first direction). In the holding position changing step, the second holding part 19 is relatively moved with respect to the first holding part 18 by operating the spacing changing mechanism 303.

### <Modifications>

In the above embodiment, although the pair of holding bodies 43 is each formed with the recess 43a, and holds the workpiece with the play at the through-hole 49 which is formed by positioning the pair of holding bodies 43 at the closed position, the present disclosure is not limited to this structure. Alternatively, the pair of holding bodies 43 may be comprised of elastic bodies. For example, the pair of holding bodies 43 may be made of flexible material, such as sponge. Alternatively, the pair of holding bodies 43 may be comprised of bundles of a large number of hairs (fibers) which are provided to stand inwardly from the pair of movable elements 48. Thus, when the pair of holding bodies 43 are located at the closed position, the harnesses 112 contact the pair of holding bodies 43 to elastically deform the elastic bodies. Therefore, the harnesses 112 are held with the play.

It is apparent for a person skilled in the art that many improvements and other embodiments of the present disclosure are possible from the above description. Therefore, the above description is to be interpreted only as illustration, and it is provided in order to teach a person skilled in the art the best modes that implement the present disclosure. Details of the structures and/or the functions may be changed substantially without departing from the spirit of the present disclosure.

### DESCRIPTION OF REFERENCE CHARACTERS

- D1: First Direction
- 1: Robot
- 13: Robotic Arm
- 13A: First Robotic Arm
- 13B: Second Robotic Arm
- 14: Control Device
- 18: First Holding Part
- 19: Second Holding Part
- 110: Connector
- 111: Connector Body
- 112: Harness

## Claims

1. A robot, comprising:
a first holding part configured to hold a given portion of a workpiece including a flexible elongated portion extending in first directions;
a second holding part configured to hold a given portion of the elongated portion of the workpiece with play in directions intersecting with the first directions; and
one or more robotic arms configured to move the first holding part and the second holding part within a given operating range,
wherein the second holding part relatively moves in the first direction with respect to the first holding part.

2. The robot of claim 1, wherein the play is a gap formed in the directions intersecting with the first directions, between the given portion of the elongated portion of the workpiece and the second holding part.

3. The robot of claim 1, wherein the second holding part includes an elastic body provided to a part of the second holding part that contacts the given portion of the elongated portion of the workpiece, and
wherein the play is formed by an elastic deformation of the elastic body.

4. The robot of any one of claims 1 to 3, further comprising:
a first arm having the first holding part; and
a second arm having the second holding part,
wherein the second arm moves the second holding part in the first direction with respect to the first holding part.

5. The robot of any one of claims 1 to 4, wherein the workpiece is a connector with harnesses including a connector body and harnesses extending from the connector body in the first directions, the elongated portion being the harnesses.

6. The robot of any one of claims 1 to 5, wherein the first holding part holds the workpiece by sucking the workpiece.

7. A conveying device, comprising:
a first holding part configured to hold a workpiece including a flexible elongated portion extending in first directions;
a second holding part configured to hold a given portion of the elongated portion of the workpiece with play in directions intersecting with the first directions; and
one or more holding part moving mechanisms configured to move the first holding part and the second holding part within a given operating range,
wherein the second holding part relatively moves in the first direction with respect to the first holding part.

8. A method of conveying a connector with harnesses, by using a robot including a first holding part, a second holding part, and one or more robotic arms configured to move the first holding part and the second holding part, the connector with harnesses including a connector body, and harnesses extending from the connector body in first directions, the method comprising the steps of:
holding the connector body by the first holding part;
holding a portion of the harnesses closer to the connector body by the second holding part; and
moving by the robotic arm the second holding part holding the portion of the harness closer to the connector body, away from the connector body held by the first holding part in the first direction.
